# EUROPÄISCHE PATENTSCHRIFT

(11) **EP 2 293 988 B1**
(45) Veröffentlichungstag und Bekanntmachung des Hinweises auf die Patenterteilung: **13.03.2013**
(21) Anmeldenummer: 09731933.9
(22) Anmeldetag: 14.04.2009
(51) Int. Cl.: B65D 19/44, B65G 1/02

(54) **LAGERGUTTRÄGER FÜR ROLLBARES LAGERGUT**
STORAGE PRODUCT CARRIER FOR ROLLABLE STORAGE PRODUCTS
SUPPORT DE MARCHANDISES ENTREPOSÉES POUR MARCHANDISES ENTREPOSÉES ROULANTES

(30) Priorität: 17.04.2008 DE 202008005333 U
(43) Veröffentlichungstag der Anmeldung: 16.03.2011
(73) Patentinhaber: Hänel & CO., 9450 Altstätten (CH)
(72) Erfinder: HÄNEL, Joachim, 74177 Bad Friedrichshall (DE)
(74) Vertreter: Seidel, Marcus
(86) Internationale Anmeldenummer: PCT/EP2009/054410
(87) Internationale Veröffentlichungsnummer: WO 2009/127628

(56) Entgegenhaltungen:
- WO-A-96/27063
- WO-A-99/58408
- WO-A-2006/136043
- DE-U1-202007 008 883
- US-A- 5 787 817

## Beschreibung

Die vorliegende Erfindung betrifft einen Lagergutträger für ein Lagerregal, gemäß dem Oberbegriff des Anspruchs 1, wie er aus der WO 99/58409A bekannt ist.

Derartige Lagergutträger werden insbesondere zur Lagerung von Lagergut in automatisierten Vertikalliften verwendet, die eine Transporteinrichtung für die Lagergutträger aufweisen. Da die Anordnung in dem Lagerregal abhängig von der Höhe des Lagerguts erfolgt, lassen sich auf den Lagergutträgern Lagergüter verschiedener Größen platzsparend einlagern.

Ein derartiger Vertikallift ist aus der EP 0 722 894 A1 bekannt. Zur Abstützung der Lagergutträger sind in diesem Lagerregal in den aus Stahlblech gefertigten Seitenwänden eingeformte Trägerauflagen vorgesehen, die die Lagergutträger abstützen. Weiter ist vorgesehen, die Lagerplätze den Lagergutträgern abhängig von der Höhe des Lagerguts zuzuweisen.

Die WO99/58408 A und US 5,787,817 A offenbaren einen Lagergutträger zur Lagerung rollbarer Gegenstände. Der Lagergutträger weist eine Vielzahl von Schienen auf, entlang welcher die rollbaren Gegenstände bewegt werden können. Abgehend von diesen Schienen ist eine Vielzahl an Rampen angeordnet, die eine gegenüber der Horizontalen abschüssige Fläche bilden. Ausgehend von den Schienen sind am Ende der abschüssigen Fläche einen Anschlag bildende vertikale Kanten angeordnet, an welcher die Räder der rollbaren Gegenstände anliegen.

Die WO 2006/136043 A offenbart eine Vorrichtung zum Transport von Flaschen und/oder von mehreren zu Gebinden von mehreren Flaschen zusammengefassten Handhabungseinheiten. Eine Transportpalette ist vorgesehen, um eine rollbare Vorrichtung aufzunehmen. Die Rollen der Vorrichtung sind in Führungsrinnen positioniert, welche im Mündungsbereich eine Einfuhrschräge bildend verbreitert ist. Am Ende jeder Führungsrinne ist ein den Rollweg begrenzender Anschlag vorgesehen. Vor diesem Anschlag ist eine Rampe vorgesehen, welche in Einfahrrollrichtung eine abgeschrägte Auffahrfläche und eine steiler geneigte Abfahrfläche aufweist. In Transportlage ist die Stützrolle zwischen dem Anschlag und der Abfahrfläche abgestützt.

Aus der WO 96/27063 A geht ein modulares Lagersystem hervor, welches insbesondere für die Lagerung von Motorfahrzeugen geeignet ist. Das modulare Lagersystem umfasst eine Vielzahl an Lagerplätzen, die nebeneinander und übereinander angeordnet sein können. Weiterhin umfasst das Lagersystem eine Transportvorrichtung zur Einlagerung und Auslagerung des Lagerguts, in der das Lagergut einer Bedienöffnung zu oder abgeführt wird.

Die DE 20 2007 008883 U1 offenbart einen Container mit einer Rückwand, zwei Seitenwänden und zwei an den Seitenwänden beweglich angeordneten Türen. Die Wände und die Türen weisen einen Rahmen auf, an dem waagerechte und senkrechte Gitterstäbe angeordnet sind. Ferner weist eine der beiden Türen eine Sicherungsvorrichtung auf, die über einen Griff betätigbar ist. Über den Griff ist eine Stange betätigbar, die an ihrem Ende eine Einrastvorrichtung aufweist. Die Einrastvorrichtung ist derart gestaltet, dass sie in den Rahmen der Türen einrastet.

Die Aufgabe der vorliegenden Erfindung besteht darin, einen Lagergutträger und ein Lagerregal zu schaffen, bei dem der rollbare Lagergutbehälter sicher ein- und ausgelagert werden kann.

Zur Lösung dieser Aufgabe wird ein Lagergutträger mit den Merkmalen gemäß Anspruch 1 vorgeschlagen.

Die Vertiefung bildet eine Art Wanne, Sicke, Nut oder Rille, die eine ausreichende Tiefe aufweist, so dass das Laufrad des Lagergutbehälters sowohl im Ruhezustand als auch bei einer Förderung des Lagergutträgers innerhalb eines Lagerregals in der Vertiefung bleibt und somit der Lagergutbehälter in seiner Lagerstellung gehalten wird. Die Vertiefung erstreckt sich im Wesentlichen entlang der Länge einer der Seiten der Bodenplatte. Die Vertiefung ist durch wenigstens eine gegenüber der Horizontalen geneigte Fläche gebildet.

Der auf der Bodenplatte rollbare Lagergutbehälter umfasst wenigstens ein Laufrad. Vorzugsweise handelt es sich um einen mit vier Laufrädern versehenen Roll- oder Rüstwagen.

Mit der erfindungsgemäßen Ausgestaltung kann der rollbare Lagergutbehälter zur Einlagerung in einem Lagerregal durch eine Bedienperson auf einfache Weise mit geringem Kraftaufwand auf die Bodenplatte geschoben werden, bis das wenigstens eine Laufrad des Lagergutbehälters in der Vertiefung aufgenommen ist und in Eingriff mit der Vertiefung gelangt. Dieses Eingreifen des Laufrades ermöglicht einen sicheren Halt des Lagergutbehälters auf dem Lagergutträger insbesondere während der Bewegung des Lagergutträgers in dem Lagerregal. Ferner können so vorbestimmte Flächenbereiche der Bodenplatte als Lagerplätze vordefiniert werden. Infolge der geneigten Fläche kann der Lagergutbehälter auch bei vergleichsweise hohem Gewicht und/oder großen Abmessungen einfach von einer Bedienperson bewegt werden.

Vorteilhafte Ausgestaltungen des erfindungsgemäßen Lagergutträgers sind in den Ansprüchen 2 bis 10 beansprucht.

Vorteilhafterweise ist die Vertiefung in Abhängigkeit des Durchmessers des Laufrades und/oder des Gewichts des Lagergutbehälters ausgebildet. Die Vertiefung kann auch durch mehrere solche, im Querschnitt betrachtet, geneigte Flächen und/oder durch wenigstens eine horizontal und/oder durch wenigstens eine vertikal verlaufende Fläche gebildet sein.

Um das Einlagern und Auslagern der rollbaren Lagergutbehälter weiter zu vereinfachen, kann die Bodenplatte vorteilhafterweise einen zur Horizontalen geneigten Lagerflächenabschnitt aufweisen. Vorzugsweise grenzt der geneigte Lagerflächenabschnitt an die Vertiefung an. Infolge dieses geneigten Bereiches kann der Kraftaufwand für das Rollen des Lagergutbehälters reduziert werden und der Lagergutbehälter rollt im Wesentlichen von alleine in Richtung auf die Vertiefung zu, bis das Laufrad in der Vertiefung aufgenommen ist und mit dieser in Eingriff steht. Eine solche Neigung vereinfacht in gleicher Weise auch das Herausziehen des Laufrades des Lagergutbehälters aus der Vertiefung über den geneigten Lagerflächenabschnitt und weiter von der Bodenplatte. Beispielsweise kann der geneigte Lagerflächenabschnitt von etwa einer Mittelachse der Bodenplatte bis hin zur Vertiefung ausgeführt sein. Grundsätzlich kann aber auch der gesamte Bereich der Bodenplatte geneigt ausgeführt sein.

Bei einer weiteren vorteilhaften Ausgestaltungsform sind mehrere Vertiefungen vorgesehen, die entlang einer Richtung beabstandet zueinander oder entlang im Wesentlichen parallel verlaufender Richtungen angeordnet sind. Auf diese Weise können vorbestimmten Bereichen der Bodenplatte Lagerplätze zugeordnet und/oder mehrere Reihen von Lagergutbehältern auf der Bodenplatte gelagert werden.

In vorteilhafter Ausgestaltung sind die wenigstens eine Vertiefung und/oder der wenigstens eine Lagerflächenabschnitt durch eine auswechselbare Baueinheit gebildet. Vorteilhafterweise umfasst die Baueinheit die Vertiefung und den geneigten Lagerflächenabschnitt und wahlweise weitere Oberflächenabschnitte der Bodenplatte und ist an der Bodenplatte befestigbar. Zur Befestigung der Baueinheit kann die Bodenplatte eine für eine Vielzahl von Baueinheiten geeignete Unter- und Stützkonstruktion aufweisen. Auf diese Weise kann je nach Typ der zu lagernden Lagergutbehälter eine vorkonstruierte Baueinheit mit in geometrischer Hinsicht auf die Laufräder der Lagergutbehälter abgestimmter Vertiefung auf die Unter- und Stützkonstruktion des Lagergutträgers aufgesetzt und befestigt werden. Dadurch kann der Lagergutträger und insbesondere dessen Bodenplatte je nach Gewicht und Größe der Lagergutbehälter und Lagergüter angepasst werden.

Bei einer weiteren vorteilhaften Ausgestaltung verläuft die Vertiefung entlang einer Seite der Bodenplatte und beabstandet zu einem Seitenrand der Bodenplatte. Beispielsweise kann so bei einer rechteckförmigen Form der Bodenplatte die Vertiefung entlang einer Längsseite und beabstandet zum äußersten Rand der Längsseite verlaufen. Vorzugsweise ist der Abstand der Vertiefung vom Seitenrand in Abhängigkeit der Geometrie der Bodenplatte und/oder des Lagergutbehälters ausgewählt.

Bei einer bevorzugten Ausführungsform mit beispielsweise rechteckförmiger Ausbildung der Bodenplatte kann sich die Vertiefung im Wesentlichen über die gesamte Länge der Längsseite erstrecken.

Als Sicherungsmaßnahme für das auf dem Lagergutträger zu lagernde Lagergut kann vorteilhafterweise vorgesehen werden, entlang wenigstens einer Seite der Bodenplatte eine Seitenwand zu befestigen. Vorzugsweise ist entlang dreier Seiten der Bodenplatte jeweils eine Seitenwand angebracht. Auf diese Weise kann der Lagergutbehälter bei einer rechteckförmigen Ausgestaltung der Bodenplatte über die vierte Seite von einem Bedienbereich auf die Bodenplatte und von der Bodenplatte in den Bedienbereich verschoben werden.

Die Seitenwand oder die Seitenwände können zugleich verhindern, dass sich in dem Lagergutbehälter ein Lagergut zu großer Abmessung befindet, so dass das Lagergut über den Lagergutbehälter hinausragt. Mit anderen Worten kann die Seitenwand oder können die mehreren Seitenwände als Überstandskontrolleinrichtung dienen. Zudem können die Seitenwände zusätzlich über eine Platte oder einen Balken ausgesteift werden. Vorzugsweise wird eine dreiecksförmige Platte herangezogen, die an zwei benachbarten Seitenwänden befestigt wird. Für den Fall, dass diese dreiecksförmige Platte in einem Eckbereich zweier Seitenwände auf den beiden Oberseiten der Seitenwände angebracht ist, so dass ein überstehendes Lagergut beim Aufschieben des Lagergutbehälters auf die Bodenplatte an der Platte anstößt, wird der Bedienperson signalisiert, dass das Lagergut oder der Lagergutbehälter nicht geeignet ist.

Um den Übergabebereich für den Lagergutträger verschließbar gestalten zu können, ist entlang einer Seite der Bodenplatte ein Tor mit wenigstens einem Torflügel vorhanden. Auf diese Weise kann der Lagergutbehälter bei geöffnetem Torflügel von dem Bedienbereich auf die Bodenplatte gebracht und anschließend der Torflügel in seine Schließstellung überführt werden. Zur einfachen Überführung des Torflügels kann dieser mit einem Laufrad versehen sein.

Um Unfälle wirksam vermeiden zu können, ist vorteilhafterweise eine Überwachungseinrichtung vorgesehen, die überprüft, ob sich das Tor im geöffneten oder geschlossenen Zustand befindet. Als Überwachungseinrichtung kann beispielsweise eine Lichtschranke und/oder ein Schalter vorgesehen werden. So soll die Lichtschranke insbesondere verhindern, dass eine Bewegung des Lagergutbehälters beginnt, bevor das Tor vollständig geschlossen ist.

Der vorgenannte Schalter kann insbesondere eine Verschlusseinrichtung des Tores überwachen. In bevorzugter Ausgestaltung sind sowohl Lichtschranke als auch Schalter vorgesehen.

Bei einer weiteren bevorzugten Ausführungsform umfasst die Verschlusseinrichtung einen Riegel und eine Aufnahme, wobei der Riegel in einer Schließstellung des Tores in die Aufnahme eingreift und wobei der Riegel in einer Öffnungsstellung des Tores außer Eingriff mit der Aufnahme ist. Vorteilhafterweise ist das Tor zweiflügelig ausgebildet und weist für jeden Torflügel eine solche Verschlusseinrichtung auf.

Der Riegel, der einen oder mehrere Torflügel arretiert, weist in einer bevorzugten Weiterbildung am unteren Ende einen codierten Sicherheitsschalter auf. Das Gegenstück dazu befindet sich in entsprechender Position in jeder Liftentnahmestelle. Vor jedem Liftstart wird abgefragt, ob der Riegel arretiert ist und erst dann die Freigabe erteilt. Somit wird gewährleistet, dass der Lagergutträger nur bei geschlossenem Tor verfahren wird. Ein selbstständiges Öffnen des Riegels ist nicht möglich.

Zur Lösung der oben genannten Aufgabe wird in Übereinstimmung mit Anspruch 11 ein Lagerregal vorgeschlagen, das mit einer Vielzahl von übereinanderliegenden und beabstandeten Trägerstützen versehen ist, die paarweise an sich gegenüberliegenden Seitenwänden angeordnet sind und wobei wenigstens ein erfindungsgemäßer Lagergutträger vorgesehen ist. Ein solches Lagerregal macht sich die Vorteile des erfindungsgemäßen Lagergutträgers zu Nutze.

Bei einer vorteilhaften Ausgestaltung ist eine steuerbare Transportvorrichtung zur Einlagerung und Auslagerung des Lagergutträgers in das Lagerregal vorgesehen. Eine solche Transportvorrichtung arbeitet vorzugsweise vollautomatisiert und kann eine in horizontaler Richtung und/oder eine in vertikaler Richtung verfahrbare Transporteinheit zur Ein- und Auslagerung der Lagergutträger umfassen.

Bei einer weiteren vorteilhaften Ausgestaltung ist wenigstens eine Bedienöffnung zur Ein- und Auslagerung des Lagergutträgers in das und aus dem Lagerregal, wobei die Lagergutbehälter von einem Bedienbereich über die Bedienöffnung auf die Bodenplatte und umgekehrt rollbar sind.

Weiterhin kann der Bedienbereich mit einer Überwachungseinrichtung und der Lagergutträger mit einem Tor versehen sein, wobei die Überwachungseinrichtung überprüft, ob sich das Tor im geöffneten oder geschlossenen Zustand befindet. So kann die Überwachungseinrichtung eine Lichtschranke umfassen, die erst bei vollständig geschlossenem Tor ein Freigabesignal an die Motoreinheit des Lagerregals erteilt.

Nachfolgend wir die Erfindung unter Bezugnahme auf die Zeichnungen weiter erläutert. Dabei zeigen schematisch:
- Fig. 1: eine perspektivische Darstellung des erfindungsgemäßen Lagergutträgers;
- Fig. 2: eine Draufsicht auf den Lagergutträger gemäß Fig. 1;
- Fig. 3: eine Seitenansicht des Lagergutträgers gemäß Fig. 1;
- Fig. 4: eine weitere Seitenansicht des Lagergutträgers gemäß Fig. 1;
- Fig. 5: einen Querschnitt gemäß der Linie V-V in Fig. 1 durch die Bodenplatte des Lagergutträgers mit einer Vertiefung;
- Fig. 6: eine weitere Ausgestaltung der Vertiefung der Bodenplatte alternativ zu Fig. 5;
- Fig. 7: eine weitere Ausgestaltung der Vertiefung der Bodenplatte alternativ zu Fig. 5;
- Fig. 8: eine perspektivische Darstellung eines Lagerregals mit dem Lagergutträger gemäß den Fig. 1 bis 5;
- Fig. 9: einen Querschnitt gemäß der Linie IX-IX durch das Lagerregal gemäß Fig. 8;
- Fig. 10: einen Querschnitt durch eine alternative Ausgestaltung des unteren Bereichs des Lagerregals gemäß den Figuren 8 und 9;
- Fig. 11: eine Draufsicht auf eine weitere Ausführungsform der Bodenplatte mit mehreren Vertiefungen;
- Fig. 12: eine Draufsicht auf eine weitere Ausführungsform der Bodenplatte mit mehreren Vertiefungen, und
- Fig. 13: einen Querschnitt gemäß der Linie XII-XII in Fig. 12.

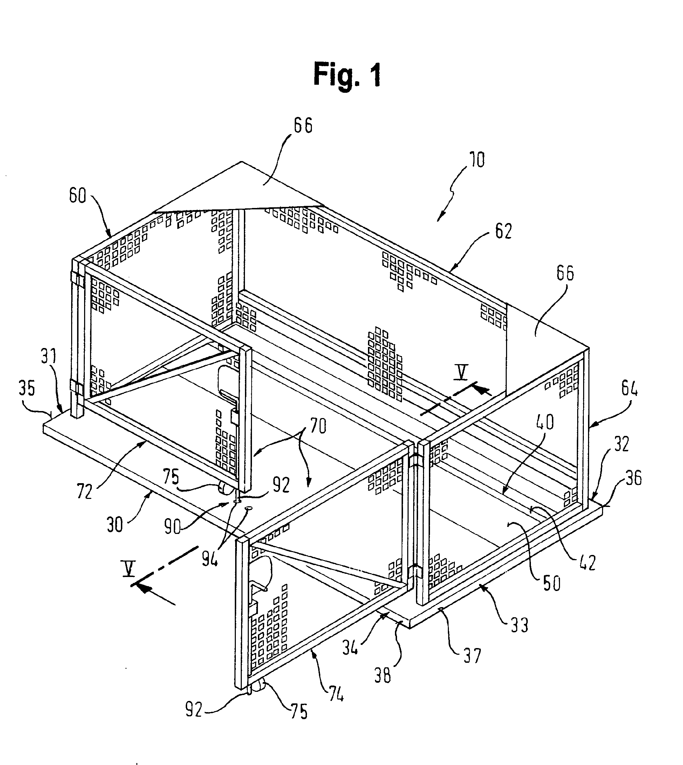

Fig. 1 zeigt den schematischen Aufbau eines erfindungsgemäßen Lagergutträgers 10 mit einer Bodenplatte 30 zur Lagerung eines mit vier Laufrädern 22 versehenen Lagergutbehälters 20 in Form eines Rollwagens.

Die Bodenplatte 30 ist im Grundriss betrachtet rechteckförmig geformt und weist vier Seiten 31, 32, 33 und 34 mit jeweils zugehörigem Seitenrand 35, 36, 37 und 38 auf. Wie Fig. 1 zeigt, bilden hierbei die Seiten 31 und 33 die kurzen Seiten und die Seiten 32 und 34 die langen Seiten des Rechtsecks. Im Bereich der Seiten 31, 32 und 33 geht jeweils eine Seitenwand 60, 62 und 64 rechtwinklig zur Bodenplatte auf. Wie Fig. 1 erkennen lässt, sind die Seitenwände 60, 62 und 64 etwas beabstandet zu den Seitenrändern 35 bis 38 positioniert. Alternativ können die Seitenwände 60, 62, 64 aber auch bündig mit den Seitenrändern 35 bis 38 abschließen. Die Seitenwände 60 und 62 sowie die Seitenwände 62 und 64 sind jeweils über eine im Grundriss dreiecksförmige Platte 66, die jeweils auf den Oberseiten der Seitenwände 60, 62, 64 befestigt ist, ausgesteift. Diese Platten 66 können zugleich verhindern, dass sich in dem Lagergutbehälter ein Lagergut zu großer Abmessung befindet, so dass das Lagergut über den Lagergutbehälter hinausragt. Diesen Zweck können auch die Seitenwände 60, 62, 64 erfüllen. Mit anderen Worten können die Seitenwände 60, 62, 64 und/oder die Platten 66 als Überstandskontrolleinrichtung dienen.

Im Bereich der Seite 34 befindet sich ein Tor 70 mit zwei Torflügeln 72 und 74, die über entsprechende Bänder an der Seitenwand 60, 64 angelenkt sind und so ein Öffnen und Schließen des Tors 70 ermöglichen. Zur einfachen Überführung des Torflügel 72, 74 von der geöffneten Stellung in die geschlossene Stellung sind diese jeweils mit einem Laufrad 75 versehen.

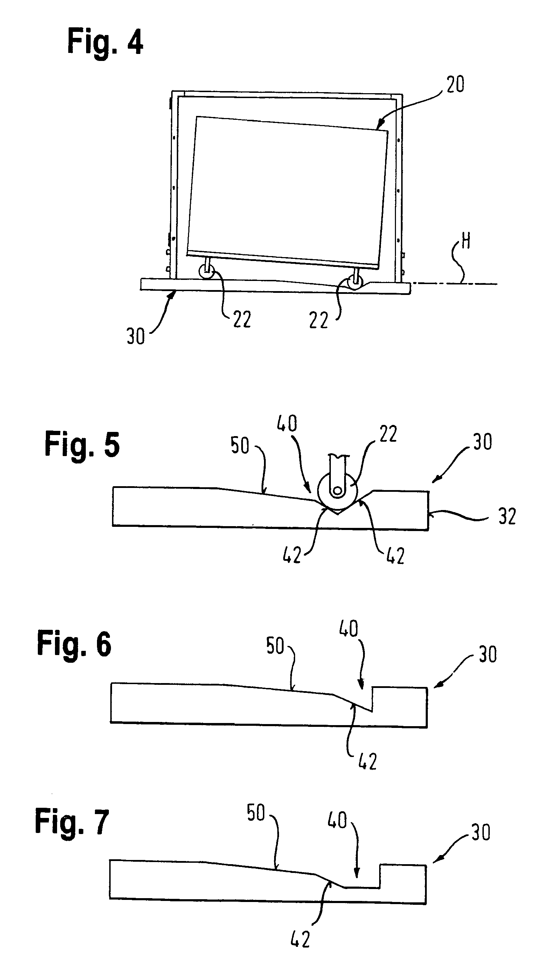

Wie eine Zusammenschau der Fig. 1, 2, 4 und 5 zeigt, weist die Bodenplatte 30 wenigstens eine Vertiefung 40 zur Aufnahme wenigstens eines Laufrades 22 auf. Wie insbesondere den Fig. 4 und 5 zu entnehmen, ist die Vertiefung 40 im Querschnitt betrachtet durch zwei zur Horizontalen H geneigte Flächen 42 gebildet. Grundsätzlich weist die Vertiefung 40 mindestens eine solche geneigte Fläche 42 auf (siehe Fig. 6) und kann auch wenigstens eine vertikale und/oder horizontale Fläche (siehe Fig. 7) umfassen.

Entsprechend der ersten Ausführungsform gemäß den Fig. 1 bis 5 verläuft die Vertiefung 40 entlang der Seite 32, beabstandet vom Seitenrand 36 und erstreckt sich im Wesentlichen über die gesamte Länge der Seite 32.

Die Vertiefung 40 bildet eine Art Wanne, Sicke, Nut oder Rille und weist eine ausreichende Tiefe auf, so dass das wenigstens eine Laufrad 22 sowohl im Ruhezustand als auch bei einem Verfahren des Lagergutträgers 10 innerhalb eines Lagerregals in der Vertiefung 40 und somit der Lagergutbehälter 20 in seiner Lagerstellung gehalten ist.

Um ein einfaches Zustellen des Lagergutbehälters 20 in die durch die Vertiefung 40 vorbestimmte Lagerstellung und auch ein einfaches Entfernen des Lagergutbehälters 20 aus der Lagerstellung und von der Bodenplatte 30 zu ermöglichen, weist die Bodenplatte 30 einen zur Horizontalen H geneigten Lagerflächenabschnitt 50 auf. Im Ausführungsbeispiel gemäß den Fig. 1 bis 5 grenzt der Lagerflächenabschnitt 50 direkt an die Vertiefung 40 an und weist vorzugsweise eine geringere Neigung relativ zur Horizontalen H als die geneigte Fläche 42 auf. Ferner erstreckt sich der Lagerflächenabschnitt 50 entlang der Seite 32 in entsprechender Länge wie die Vertiefung 40 und in Richtung der Seiten 31, 33 betrachtet in einer Breite, die weniger als die Hälfte der Länge des Seitenrands 35, 37 beträgt. In alternativen Ausführungsformen können auch mehrere Lagerflächenabschnitt 50 mit wahlweise unterschiedlichen Neigungen ausgebildet werden und auch beabstandet zur Vertiefung 40 angeordnet sein.

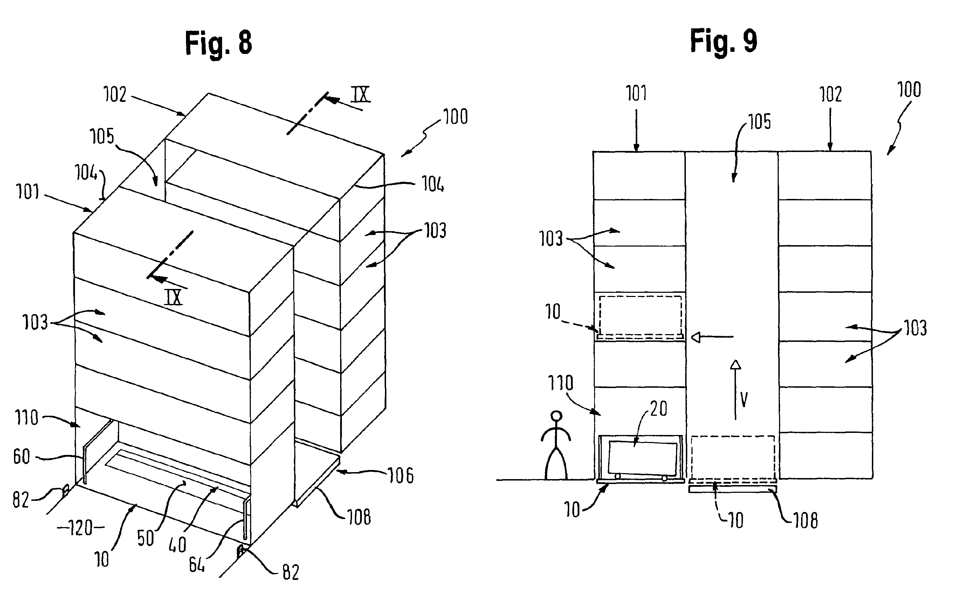

Die Figuren 8 und 9 zeigen eine perspektivische Darstellung und einen Querschnitt eines Lagerregals 100 zur Einlagerung einer Vielzahl von Lagergutträgern 10 gemäß den Fig. 1 bis 5. Das Lagerregal 100 umfasst zwei Regaleinheiten 101, 102, die durch einen Transportschacht 105 beabstandet sind. In jeder Regaleinheit 101, 102 wird eine Vielzahl von Lagerplätzen 103 zur Verfügung gestellt. Zur Bildung der Lagerplätze 103 in den Regaleinheiten 101, 102 ist eine Vielzahl von übereinanderliegenden und beabstandeten Trägerstützen vorgesehen, die paarweise an sich gegenüberliegenden Seitenwänden 104 angeordnet sind. An diesen Trägerstützen stützten sich die Lagergutträger 10 ab.

Die Regaleinheit 101 umfasst ferner eine Bedienöffnung 110, die derart ausgebildet ist, dass die Lagergutbehälter 20 von einem vor dem Lagerregal 100 gelegenen Bedienbereich 120 von der Bedienperson ebenerdig auf den im Bereich der Bedienöffnung 110 bereitgestellten Lagergutträger 10 gebracht, insbesondere gerollt, werden können. Zur Überführung des Lagergutträgers 10 von der Bedienöffnung 110 in den Transportschacht 105 umfasst die Transportvorrichtung eine erste horizontal verfahrbare Transporteinheit 108. Diese erste Transporteinheit 108 wird auch als Extraktor bezeichnet. Ferner umfasst die Transportvorrichtung eine zweite, in dem Transportschacht 105 in einer Vertikalrichtung V verfahrbare Transporteinheit.

In Fig. 9 ist eine Situation dargestellt, bei der von der Bedienperson bereits ein Lagergutbehälter 20 über die Bedienöffnung 110 auf den Lagergutträger 10 gerollt ist, der zur Einlagerung in das Lagerregal 100 vorgesehen ist. Hierzu wird der Lagergutbehälter 20 von der Bedienperson aus dem Bedienbereich 120 auf die Bodenplatte 30 und über den geneigten Lagerflächenabschnitt 50 soweit auf den Lagergutträger 10 geschoben, bis beispielsweise zwei Laufräder 22 in der Vertiefung 40 aufgenommen sind (siehe auch Fig. 4). Diese Bewegung wird durch die zur Vertiefung 40 hin gerichtete Neigung des Lagerflächenabschnittes 50 unterstützt, so dass der Lagergutbehälter 20 im Wesentlichen von alleine in die Vertiefung 40 rollt.

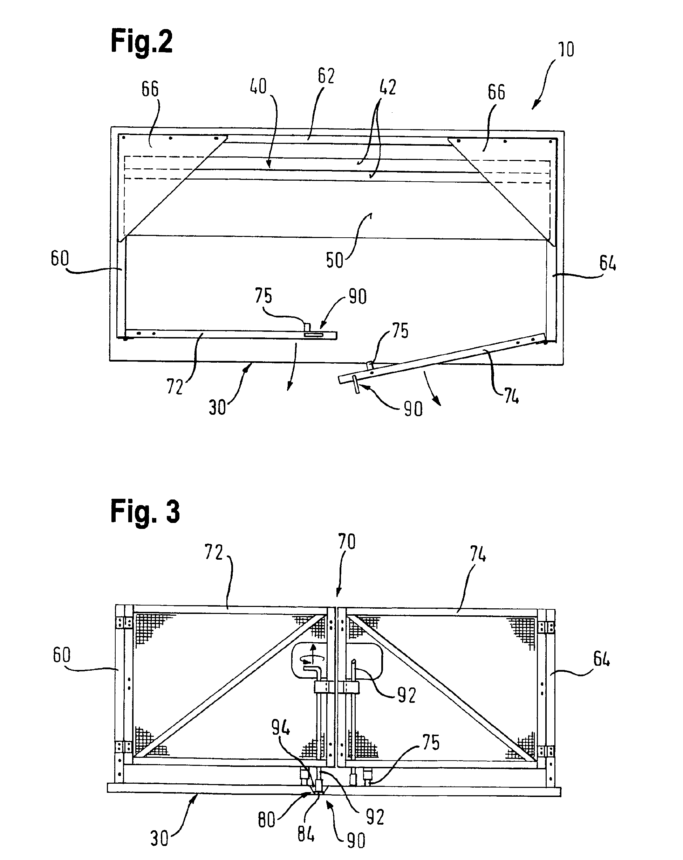

Anschließend überführt die Bedienperson die beiden Torflügel 72 und 74 in die geschlossene Stellung und betätigt eine Verschlusseinrichtung 90, die einen Riegel 92 und eine Aufnahme 94 umfasst. Der Riegel 92 ist entsprechend den in Fig. 3 angedeuteten Pfeilen von einer Entriegelungs- in eine Verriegelungsstellung verstellbar. Die Aufnahme 94 wird durch eine Vertiefung in der Bodenplatte 30 gebildet. In der Schließstellung des Tors 70 greift der Riegel 92 in die Aufnahme 94 ein, wohingegen der Riegel 92 in eine Öffnungsstellung des Tors 70 außer Eingriff mit der Aufnahme 94 ist.

Um ein ordnungsgemäßes Schließen der beiden Torflügel 72, 74 zu gewährleisten bevor der Lagergutträger 10 verfahren wird, ist eine Überwachungseinrichtung 80 vorgesehen, die überprüft, ob sich das Tor 70 oder die Torflügel 72, 74 im geöffneten oder geschlossenen Zustand befinden. Hierzu kann ein der Aufnahme 94 zugeordneter Schalter 84 vorgesehen werden, der überprüft, ob der Riegel 92 bestimmungsgemäß in die Aufnahme 94 eingreift. Ein entsprechendes Gegenstück zu dem Schalter 84 ist im unteren Ende des Riegels 92 vorgesehen.

Ferner kann im Bereich der Bedienöffnung 120, die auch als Entnahmestelle bezeichnet werden kann, eine weitere Aufnahme oder Bohrung vorgesehen sein, in die der Riegel 92 in der Öffnungsstellung des Tores eingreifen kann. Diese weitere Aufnahme und/oder das untere Ende des Riegels 92 kann alternativ oder zusätzlich zu oben erläuterter Überwachungseinrichtung 80 ebenso mit einem Schalter oder Schaltkontakt versehen sein, so dass bei in der weiteren Aufnahme befindlichem Riegel 92 die Transportvorrichtung 106 des Lagerregals 100 nicht in Bewegung versetzt wird. Mit anderen Worten kann wenigstens eine Überwachungseinrichtung 80 vorgesehen werden, die dem Lagergutträger 10 und/oder dem Bedienbereich 120 zugeordnet ist.

Zusätzlich oder alternativ kann eine Lichtschranke 82 vorgesehen werden, die im Bedienbereich 120 angeordnet ist und überprüft, ob sich das Tor 70 oder die Torflügel 72, 74 im geöffneten oder geschlossenen Zustand befinden (siehe Fig. 8).

Ferner ist der Lagergutträger 10 in Fig. 9 in seiner späteren Position, auf der Transporteinheit 108 befindlich, mit gestrichelten Linien angedeutet. Die Transporteinheit 108 ist also derart ausgestattet, um den Lagergutträger 10 aus der Bedienöffnung 110 in den Bereich des Transportschachtes 105 auf die Transportvorrichtung 106 zu befördern.

Anschließend wird der Lagergutträger 10 entlang der Vertikalrichtung V bis auf Höhe eines zugewiesenen Lagerplatz 103 transportiert und schließlich mittels der Transporteinheit 108 in horizontaler Richtung in den Lagerplatz 103 eingeschoben (siehe mit gestrichelten Linien angedeutete, obere Position des Lagergutträgers 10 in Fig. 9).

Das Lagerregal 100 kann mit einer Steuereinheit versehen sein, die automatisch einen geeigneten Lagerplatz 103 für einen einzulagernden Lagergutträger 10 ermittelt und dementsprechend die Transportvorrichtung 106 ansteuert und verfährt.

Zur Auslagerung eines Lagergutträgers 10 kann die Bedienperson über eine im Bereich der Bedienöffnung 110 vorgesehene Eingabeeinheit den gewünschten Lagergutbehälter 20 oder Lagergutträger 10 anfordern. Nachdem die Steuereinheit den Lagerplatz 103, den zugehörigen Lagergutbehälter 20 oder den Lagergutträger 10 ermittelt hat, wird der zugehörige Lagergutträger 10 in den Bereich der Bedienöffnung 110 verfahren, so dass sich die Oberseite der Bodenplatte 30 im Wesentlichen auf Höhe der Oberfläche des Bedienbereichs 120 befindet. Sodann kann der Lagergutbehälter 20 aus seiner Lagerstellung mit in der Vertiefung 40 aufgenommenen Laufrädern 22 aus der Vertiefung 40 über den geneigten Lagerflächenabschnitt 50 von der Bodenplatte 30 und in den Bedienbereich 120 gerollt und anschließend an den gewünschten Zielort gebracht werden.

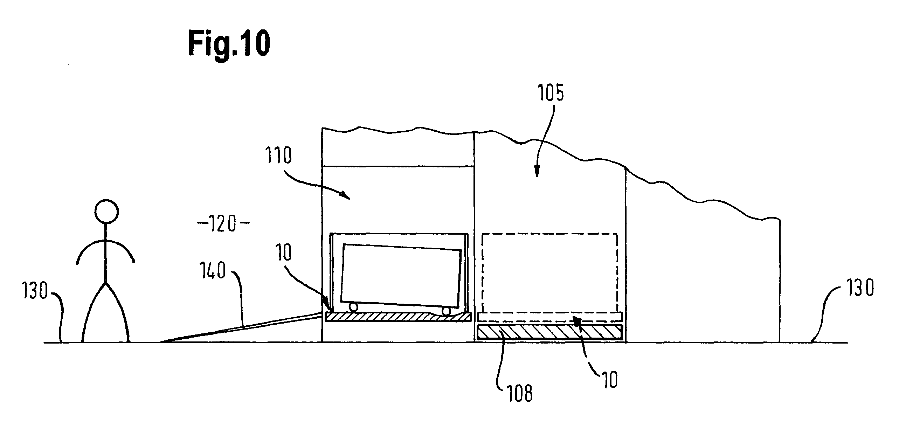

Fig. 10 zeigt eine alternative Ausgestaltung des unteren Bereiches des Lagerregals 100 gemäß den Figuren 8 und 9. Gemäß Fig. 10 ist das Lagerregal 100 auf einer Bodenfläche 130 eines Lagers oder Raumes aufgestellt. Der Lagergutträger 10 befindet sich in der in Fig. 10 gezeigten Situation in der Bedienöffnung 110. Ferner ist der Lagergutträger 10 mit gestrichelten Linien in seiner späteren Position, auf der Transporteinheit 108 befindlich, angedeutet. Um den Lagergutträger 10 von dem Bedienbereich 120 in den erhöhten Bereich der Bedienöffnung 110 befördern zu können, ist eine Rampe 140 vorgesehen. Im gezeigten Ausführungsbeispiel gemäß Fig. 10 beträgt die Höhendifferenz zwischen Oberkante Bodenfläche 130 und Oberkante der Abstellfläche für den Lagergutträger 10 im Bereich der Bedienöffnung 110 etwa 535 mm. Diese Höhendifferenz kann konstruktionsbedingt auch größer oder kleiner ausfallen. Im Vergleich dazu ist bei der in den Figuren 8 und 9 gezeigten Variante das Lagerregal 100 in einer Vertiefung oder Grube des Lagerbodens oder der Bodenfläche 130 aufgestellt.

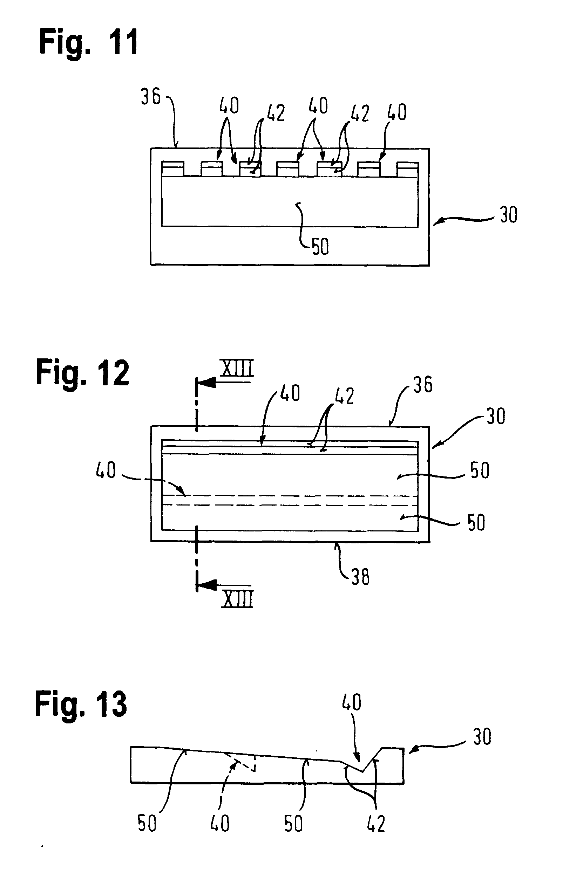

Schließlich zeigen die Fig. 11 bis 13 weitere Ausführungsformen des Lagergutträgers 10 mit Varianten im Hinblick auf die Ausbildung der Vertiefung 40.

In Fig. 11 sind mehrere Vertiefungen 40 vorgesehen, die entlang einer Richtung parallel zur Seite 32 beabstandet zueinander angeordnet sind. Bei einer derartigen Anordnung können auf den jeweiligen Abstand der Laufräder 22 der Lagergutbehälter 20 abgestimmte Lagerplätze definiert werden.

Die Figuren 12 und 13 zeigen eine Ausgestaltung mit zwei Vertiefungen 40, die parallel zueinander und zu den Seitenrändern 36 und 38 angeordnet sind. Hierbei ist die zur Seite 32 beabstandete Vertiefung wie in Fig. 5 gezeigt ausgebildet. Die mit gestrichelten Linien angedeutete Vertiefung 40 kann bei Bedarf durch einen schwenkbaren Abschnitt der Bodenplatte 30 gebildet werden. Der schwenkbare Abschnitt ist um eine horizontale Achse aus der Ebene des geneigten Lagerflächenabschnittes 50 nach unten schwenkbar, so dass in der nach unten geschwenkten Position des Abschnitts die zweite Vertiefung 40 ausgebildet ist. Auf diese Weise ist es möglich, zunächst mehrere Lagergutbehälter 20 über den noch nicht nach unten geschwenkten Bereich der hinteren Vertiefung 40 zuzustellen und anschließend bei weiteren Einlagerungsbedarf und nach Absenken des schwenkbaren Bodenplattenabschnitts in einer zweiten Reihe Lagergutbehälter 20 mit ihren zugehörigen Laufrädern 22 in die weitere Vertiefung 40 einzurollen.

Bei einer bevorzugten Ausgestaltung kann die Vertiefung 40 und/oder der Lagerflächenabschnitt 50 durch eine auswechselbare Baueinheit oder ein Modul bereitgestellt werden. Auf diese Weise kann je nach Ausbildung des wenigstens eines Laufrades 22 oder des Lagergutbehälters 20 die Oberseite der Bodenplatte 30 mit einer oder mehreren entsprechend geformten Vertiefungen 40 und zugehörigen Lagerflächenabschnitten 50 ausgebildet werden. Diese Baueinheit kann auf einfache Weise auf eine entsprechende Unter- und Stützkonstruktion der Bodenplatte 30 montiert werden.

Der beschriebene Lagergutträger 10 zeichnet sich insbesondere dadurch aus, dass durch die Vertiefung 40 ein sicherer Halt der Lagergutbehälter 20 auf dem Lagergutträger 10 gewährleistet ist. Weiterhin wird ein von der Bedienperson durchzuführender Entnahme- und Zustellvorgang auf Grund der geneigten Fläche 42 der Vertiefung 40 und des wahlweise vorhandenen geneigten Lagerflächenabschnitts 50 erleichtert. Ferner wird der Bedienperson mit der Vertiefung 40 ein vorbestimmter Lagerplatz vorgegeben. Ferner kann der Lagergutträger 10 auf einfache Weise an unterschiedliche Lagergutbehälter 20 mit unterschiedlichem Gewicht und/oder unterschiedliche Laufräder 22 angepasst werden.

### Bezugszeichenliste

- 10: Lagergutträger

- 20: Lagergutbehälter
- 22: Laufrad

- 30: Bodenplatte
- 31: Seite
- 32: Seite
- 33: Seite
- 34: Seite
- 35: Seitenrand
- 36: Seitenrand
- 37: Seitenrand
- 38: Seitenrand

- 40: Vertiefung
- 42: geneigte Fläche

- 50: Lagerflächenabschnitt

- 60: Seitenwand
- 62: Seitenwand
- 64: Seitenwand
- 66: Platte

- 70: Tor
- 72: Torflügel
- 74: Torflügel
- 75: Laufrad

- 80: Überwachungseinrichtung
- 82: Lichtschranke
- 84: Schalter

- 90: Verschlusseinrichtung
- 92: Riegel
- 94: Aufnahme

- 100: Lagerregal
- 101: Regaleinheit
- 102: Regaleinheit
- 103: Lagerplatz
- 104: Seitenwand
- 105: Transportschacht
- 106: Transportvorrichtung
- 108: Transporteinheit

- 110: Bedienöffnung
- 120: Bedienbereich
- 130: Bodenfläche
- 140: Rampe

- H: Horizontale
- V: Vertikalrichtung

## Patentansprüche

1. Lagergutträger (10) für ein Lagerregal (100), das eine Vielzahl von übereinanderliegenden und beabstandeten Trägerstützen aufweist, die paarweise an sich gegenüberliegenden Seitenwänden des Lagerregals (100) angeordnet sind und den Lagergutträger (10) abstützen, wobei der Lagergutträger (10) zur Lagerung eines rollbaren, mit wenigstens einem Laufrad (22) versehenen Lagergutbehälters (20) eine Bodenplatte (30) aufweist, die wenigstens eine Vertiefung (40) zur Aufnahme des Laufrades (22) des Lagergutbehälters (20) aufweist, und wobei sich die Vertiefung (40) im Wesentlichen entlang der Länge einer der Seiten (31, 32, 33, 34) der Bodenplatte (30) erstreckt, **dadurch gekennzeichnet, dass** die Vertiefung (40) durch wenigstens eine gegenüber der Horizontalen (H) geneigte Fläche (42) gebildet ist.

2. Lagergutträger (10) nach Anspruch 1, **dadurch gekennzeichnet, dass** die Bodenplatte (30) wenigstens einen zur Horizontalen (H) geneigten Lagerflächenabschnitt (50) aufweist.

3. Lagergutträger (10) nach Anspruch 2, **dadurch gekennzeichnet, dass** der geneigte Lagerflächenabschnitt (50) an die Vertiefung (40) angrenzt.

4. Lagergutträger (10) nach einem der vorhergehenden Ansprüche, **dadurch gekennzeichnet, dass** mehrere Vertiefungen (40) vorgesehen sind, die entlang einer Richtung beabstandet zueinander oder entlang im Wesentlichen parallel verlaufender Richtungen angeordnet sind.

5. Lagergutträger (10) nach einem der vorhergehenden Ansprüche, **dadurch gekennzeichnet, dass** die wenigstens eine Vertiefung (40) und/oder der wenigstens eine Lagerflächenabschnitt (50) durch eine auswechselbare Baueinheit gebildet sind.

6. Lagergutträger (10) nach einem der vorhergehenden Ansprüche, **dadurch gekennzeichnet, dass** die Vertiefung (40) entlang einer Seite (31, 32, 33, 34) der Bodenplatte (30) beabstandet zu einem Seitenrand (35, 36, 37, 38) der Bodenplatte (30) verläuft.

7. Lagergutträger (10) nach einem der vorhergehenden Ansprüche, **dadurch gekennzeichnet, dass** entlang wenigstens einer Seite (31, 32, 33, 34) der Bodenplatte (30) eine Seitenwand (60, 62, 64, 66) befestigt ist, wobei vorzugsweise entlang dreier Seiten (31, 32, 33, 34) der Bodenplatte (30) jeweils eine Seitenwand (60, 62, 64, 66) angebracht ist.

8. Lagergutträger (10) nach einem der vorhergehenden Ansprüche, **dadurch gekennzeichnet, dass** entlang einer Seite (31, 32, 33, 34) der Bodenplatte (30) ein Tor (70) mit wenigstens einem Torflügel (72, 74) vorhanden ist.

9. Lagergutträger (10) nach Anspruch 8, **dadurch gekennzeichnet, dass** eine Überwachungseinrichtung (80) vorgesehen ist, die überprüft, ob sich das Tor (70) im geöffneten oder geschlossenen Zustand befindet, wobei die Überwachungseinrichtung (80) vorzugsweise einen Schalter (84) aufweist, der eine Verschlusseinrichtung (90) des Tores überwacht.

10. Lagergutträger (10) nach Anspruch 9, **dadurch gekennzeichnet, dass** die Verschlusseinrichtung (90) einen Riegel (92) und eine Aufnahme (94) umfasst, wobei der Riegel (92) in einer Schließstellung des Tores (70) in die Aufnahme (94) eingreift und wobei der Riegel (92) in einer Öffnungsstellung des Tores (70) außer Eingriff mit der Aufnahme (94) ist.

11. Lagerregal (100) mit einer Vielzahl von übereinanderliegenden und beabstandeten Trägerstützen, die paarweise an sich gegenüberliegenden Seitenwänden angeordnet sind, wobei das Lagervegal wenigstens einen Lagergutträger (10) aufweist, **dadurch gekennzeichnet dass** wenigstens ein Lagergutträger (10) nach einem der vorhergehenden Ansprüche angeordnet ist.

12. Lagerregal (100) nach Anspruch 11, **gekennzeichnet durch** eine steuerbare Transportvorrichtung (106) zur Einlagerung und Auslagerung des Lagergutträgers (10) in das Lagerregal (100).

13. Lagerregal (100) nach Anspruch 11 oder 12, **gekennzeichnet durch** wenigstens eine Bedienöffnung (110) zur Ein- und Auslagerung des Lagergutträgers (10) in das und aus dem Lagerregal (100), wobei die Lagergutbehälter (20) von einem Bedienbereich (120) über die Bedienöffnung (110) auf die Bodenplatte (30) und umgekehrt rollbar sind.

14. Lagerregal (100) nach einem der Ansprüche 11 bis 13, **dadurch gekennzeichnet, dass** der Bedienbereich (120) mit einer Überwachungseinrichtung (80) und der Lagergutträger (10) mit einem Tor (70) versehen ist, wobei die Überwachungseinrichtung (80) überprüft, ob sich das Tor (70) im geöffneten oder geschlossenen Zustand befindet.

## Claims

1. Storage product carrier (10) for a storage rack (100) having a plurality of carrier supports disposed one upon the other and at a distance from each other, arranged in pairs on opposite side walls of the storage rack (100) and which support the storage product carrier (10), wherein the storage product carrier (10) which is intended for the storage of a rollable storage product container (20) with at least one wheel (22) comprises a base plate (30) having at least one depression (40) for receiving the wheel (22) of the storage product container (20), and wherein the depression (40) extends essentially along the length of one of the sides (31, 32, 33, 34) of the base plate (30) **characterised in that** the depression (40) is formed of at least one surface (42) inclined vis-à-vis the horizontal (H).

2. Storage product carrier (10) according to claim 1 **characterised in that** the base plate (30) has at least one storage surface section (50) inclined vis-à-vis the horizontal (H).

3. Storage product carrier (10) according to claim 2 **characterised in that** the inclined storage surface section (50) is adjacent to the depression (40).

4. Storage product carrier (10) according to one of the preceding claims **characterised in that** multiple depressions (40) are provided which are arranged in one direction at a distance from each other or along essentially parallel directions.

5. Storage product carrier (10) according to one of the preceding claims **characterised in that** the at-least-one depression (40) and/or the at-least-one storage surface section (50) take the form of an exchangeable unit.

6. Storage product carrier (10) according to one of the preceding claims **characterised in that** the depression (40) extends along one side (31, 32, 33, 34) of the base plate (30) at a distance from the side edge (35, 36, 37, 38) of the base plate (30).

7. Storage product carrier (10) according to one of the preceding claims **characterised in that** a side wall (60, 62, 64, 66) is fixed along at least one side (31, 32, 33, 34) of the base plate (30), wherein preferably a side wall (60, 62, 64, 66) is fixed along each of three sides (31, 32, 33, 34) of the base plate (30).

8. Storage product carrier (10) according to one of the preceding claims **characterised in that** a door (70) having at least one leaf (72, 74) is provided along one side (31, 32, 33, 34) of the base plate (30).

9. Storage product carrier (10) according to claim 8 **characterised in that** a monitoring device (80) is provided which checks whether the door (70) is in an open or a closed state wherein the monitoring device (80) preferably has a switch (84) which monitors a fastening device (90) for the door.

10. Storage product carrier (10) according to claim 9 **characterised in that** the fastening device (90) comprises a bolt (92) and a socket (94) wherein the bolt (92) engages in the socket (94) when the door (70) is in the closed position and wherein the bolt (92) is not engaged in the socket (94) when the door (70) is in the open position.

11. Storage rack (100) with multiple carrier supports above and below and at a distance from each other arranged in pairs on opposite side walls, wherein the storage rack (100) contains at least one storage product carrier (10) **characterised in that** at least one storage product carrier (10) is arranged according to one of the preceding claims.

12. Storage rack (100) according to claim 11 **characterised by** a controllable transport device (106) for storing and retrieving of the storage product carrier (10) in the storage rack (100).

13. Storage rack (100) according to claim 11 or 12 **characterised by** at least one service opening (110) for storing the storage product carrier (10) in, and retrieving it from, the storage rack (100) wherein the storage product container (20) can be wheeled from an operating area (120) via the service opening (110) onto the base plate (30) and vice versa.

14. Storage rack (100) according to one of the claims 11 to 13 **characterised in that** the operating area (120) is provided with a monitoring device (80) and the storage product container (10) with a door (70) wherein the monitoring device (80) checks whether the door (70) is in an open or a closed state.

## Revendications

1. Support de marchandises entreposées (10) pour un rayonnage d'entrepôt (100), qui comprend une pluralité de soutiens de support disposés les uns au-dessus des autres et écartés, lesquels sont agencés par paires sur des parois latérales mutuellement opposées du rayonnage d'entrepôt (100) et soutiennent le support de marchandises entreposées (10), dans lequel le support de marchandises entreposées (10) comprend une plaque de sol (30) pour le stockage d'un récipient (20) pour marchandises entreposées, capable de rouler et doté d'au moins une roue de déplacement (22), ladite plaque de sol comportant au moins un renfoncement (40) pour la réception de la roue de déplacement (22) du récipient (20), et le renfoncement (40) s'étend sensiblement le long de la longueur de l'un des côtés (31, 32, 33, 34) de la plaque de sol (30),
**caractérisé en ce que** le renfoncement (40) est formé par au moins une surface (42) inclinée par rapport à l'horizontale (H).

2. Support de marchandises entreposées (10) selon la revendication 1, **caractérisé en ce que** la plaque de sol (30) comprend au moins un tronçon de surface de stockage (50) incliné par rapport à l'horizontale (H).

3. Support de marchandises entreposées (10) selon la revendication 2, **caractérisé en ce que** le tronçon de surface de stockage (50) incliné est adjacent au renfoncement (40).

4. Support de marchandises entreposées (10) selon l'une des revendications précédentes, **caractérisé en ce qu'**il est prévu plusieurs renfoncements (40), qui sont agencés à distance les uns des autres le long d'une direction, ou le long de directions sensiblement parallèles.

5. Support de marchandises entreposées (10) selon l'une des revendications précédentes, **caractérisé en ce que** ledit au moins un renfoncement (40) et/ou ledit au moins un tronçon de surface de stockage (50) sont formés par une unité structurelle interchangeable.

6. Support de marchandises entreposées (10) selon l'une des revendications précédentes, **caractérisé en ce que** le renfoncement (40) s'étend le long d'un côté (31, 32, 33, 34) de la plaque de sol (30) à distance d'une bordure latérale (35, 36, 37, 38) de la plaque de sol (30).

7. Support de marchandises entreposées (10) selon l'une des revendications précédentes, **caractérisé en ce qu'**une paroi latérale (60, 62, 64, 66) est fixée le long d'au moins un côté (31, 32, 33, 34) de la plaque de sol (30), et de préférence une paroi latérale respective (60, 62, 64, 66) est montée le long de trois côtés (31, 32. 33, 34) de la plaque de sol (30).

8. Support de marchandises entreposées (10) selon l'une des revendications précédentes, **caractérisé en ce qu'**une porte (70) avec au moins un battant de porte (72, 74) est présente le long d'un côté (31, 32, 33, 34) de la plaque de sol (30).

9. Support de marchandises entreposées (10) selon la revendication 8, **caractérisé en ce qu'**il est prévu un système de surveillance (80) qui vérifie si la porte (70) se trouve en situation ouverte ou fermée, et le système de surveillance (80) comprend de préférence un commutateur (84) qui surveille un dispositif de fermeture (90) de la porte.

10. Support de marchandises entreposées (10) selon la revendication 9, **caractérisé en ce que** le dispositif de fermeture (90) comprend un verrou (92) et un logement (94), tel que le verrou (92) s'engage dans le logement (94) dans une situation de fermeture de la porte (70), et dans une situation d'ouverture de la porte (70) le verrou (92) est hors d'engagement avec le logement (94)

11. Rayonnage d'entrepôt (100) comprenant une pluralité de soutiens de support disposés les uns au-dessus des autres et écartés, qui sont agencés par paires sur des parois latérales mutuellement opposées, ledit rayonnage d'entrepôt comprenant au moins un support de marchandises entreposées (10), **caractérisé en ce que** l'un au moins des supports de marchandises entreposées (10) est agencé selon l'une des revendications précédentes.

12. Rayonnage d'entrepôt (100) selon la revendication 11, **caractérisé par** un dispositif de transport commandé (106) pour la mise en entrepôt et la sortie du support de marchandises entreposées (10) dans le rayonnage d'entrepôt (100).

13. Rayonnage d'entrepôt (100) selon la revendication 11 ou 12, **caractérisé par** au moins une ouverture de service (110) pour la mise en entrepôt et la sortie du support de marchandises entreposées (10) dans le rayonnage d'entrepôt (100) et hors de celui-ci, dans lequel les récipients de marchandises entreposées (20) sont capables de rouler depuis une zone de service (120) via l'ouverture de service (110) jusque sur la plaque de sol (30) et inversement.

14. Rayonnage d'entrepôt (100) selon l'une des revendications 11 à 13, **caractérisé en ce que** la zone de service (120) est pourvue d'un système
de surveillance (80) et le support de marchandises entreposées (10) est pourvu d'une porte (70), et le système de surveillance (80) vérifie si la porte (70) se trouve en situation ouverte ou fermée.
